# EUROPÄISCHE PATENTSCHRIFT

(11) **EP 2 985 452 B1**
(45) Veröffentlichungstag und Bekanntmachung des Hinweises auf die Patenterteilung: **15.07.2020**
(21) Anmeldenummer: 15179463.3
(22) Anmeldetag: 03.08.2015
(51) Int. Cl.: F03D 1/06

(54) **ROTORBLATTVERLÄNGERUNGSKÖRPER SOWIE WINDENERGIEANLAGE**
ROTOR BLADE EXTENSION BODY AND WIND ENERGY PLANT
CORPS DE RALLONGE DE PALE DE ROTOR ET EOLIENNE

(30) Priorität: 12.08.2014 DE 102014215966
(43) Veröffentlichungstag der Anmeldung: 17.02.2016
(73) Patentinhaber: Senvion Deutschland GmbH, 22297 Hamburg (DE)
(72) Erfinder: ERBSLÖH, Sascha, 24784 Westerrönfeld (DE); KORJAHN, Christoph Matthias, 24358 Ahlefeld-Bistensee (DE); TREDE, Alf, 25885 Immenstedt (DE)
(74) Vertreter: Wallinger Ricker Schlotter Tostmann

(56) Entgegenhaltungen:
- EP-A1- 2 292 926
- EP-A1- 2 343 451
- EP-A2- 2 527 642
- WO-A1-2013/171257
- DE-A1-102008 037 605
- DE-A1-102011 088 025
- DE-U1-202011 103 091
- US-A1- 2011 142 636

## Beschreibung

Die Erfindung betrifft einen Rotorblattverlängerungskörper zur Verwendung mit einem Rotorblatt eines Rotors einer Windenergieanlage, wobei der Rotorblattverlängerungskörper längserstreckt ist, wobei am Umfang des Rotorblattverlängerungskörpers ein Auftrieberzeugungselement angebracht ist. Zudem betrifft die Erfindung ein entsprechendes Rotorblatt mit einem Rotorblattverlängerungskörper sowie die Verwendung eines Rotorblattverlängerungskörpers an einem Rotorblatt einer Windenergieanlage. Schließlich betrifft die Erfindung eine Windenergieanlage.

Es ist bekannt, zur Erhöhung der Leistung einer Windenergieanlage die Rotorblätter durch Verwendung von Rotorblattverlängerungskörpern, die üblicherweise zylindrisch sind, zu erhöhen.

Aus WO 01/42647 A2 sind entsprechende Rotorblattverlängerungskörper bekannt. Diese rein strukturellen Rotorblattverlängerungskörper dienen dazu, die Rotorblätter zu verlängern und damit den überstrichenen Bereich der Rotorblätter bei Rotation des Rotors umfassend die Rotorblätter zu vergrößern. Hierdurch wird mehr Leistung einer entsprechenden Windenergieanlage erzielt. Die Rotorblattverlängerungskörper sind allerdings zylindrisch und erzeugen somit keinerlei Auftrieb, sondern bremsen aufgrund des Luftwiderstandes den Rotor.

In US 2011/0142636 A1 ist eine Verlängerungsbaugruppe für ein Rotorblatt einer Windkraftanlage beschrieben, wobei die Verlängerungsbaugruppe einen Flügel aufweist, der ein im Wesentlichen aerodynamisches Profil definiert.

Darüber hinaus sind in WO 2013/171257 A1 ein System und ein Verfahren zum Aufbringen von zusätzlichen Vorrichtungen auf einem Rotorblatt einer Windkraftanlage offenbart. Hierbei werden aerodynamische Vorrichtungen auf dem Rotorblatt mit einem Stützträger angeordnet.

Außerdem ist in DE 10 2011 088 025 A1 ein Rotorblatt einer Windenergieanlage mit einem Rotorblattinnenteil und einem Rotorblattaußenteil offenbart, wobei das Rotorblattinnenteil und das Rotorblattaußenteil miteinander verbunden sind (vgl. Anspruch 1).

Ferner offenbart DE 20 2011 103 091 U1 ein Rotorblatt für eine Windturbine.

Darüber hinaus ist in DE 10 2008 037 605 A1 ein mehrteiliger Flügel für eine Windkraftanlage beschrieben, der ein Nabenverlängerungselement aufweist. Ferner weist der mehrteilige Flügel auch eine aerodynamische Verkleidung auf, wobei die aerodynamische Verkleidung über dem Nabenverlängerungselement befestigt ist.

Die EP 2 343 451 A1 offenbart eine Windenergieanlage mit einer Vielzahl an Strömungsführungseinrichtungen, welche an einer profilierten Oberfläche auf der Druckseite des Rotorblatts angeordnet ist. Die sich länglich erstreckenden Strömungsführungseinrichtungen sind zu einer ersten Strömungsführungsgruppe zusammengefasst. Weitere Beispiele im Stand der Technik sind aus EP 2 292 926 A1 und EP 2 527 642 A2 bekannt.

Es ist Aufgabe der vorliegenden Erfindung, einen Rotorblattverlängerungskörper, ein Rotorblatt mit einem Rotorblattverlängerungskörper und eine entsprechende Windenergieanlage anzugeben, bei der mit geringen Kosten die Leistung sehr effizient erhöht wird.

Gelöst wird diese Aufgabe durch einen Rotorblattverlängerungskörper zur Verwendung mit einem Rotorblatt eines Rotors einer Windenergieanlage gemäß Anspruch 1, ein Rotorblatt mit Rotorblattverlängerungskörper gemäß Anspruch 3, eine Windenergienanlage mit einem Rotorblatt gemäß Anspruch 4 sowie eine Verwendung eines Rotorblattverlängerungskörpers an einem Rotorblatt einer Windenergieanlage gemäß Anspruch 5.

Durch den erfindungsgemäßen Rotorblattverlängerungskörper wird aus einem an sich nur strukturell verwendeten Rotorblattverlängerungskörper ein Auftrieb erzeugendes Mittel, wodurch die dem Wind entnommene Leistung des Rotorblatts, an dem der Rotorblattverlängerungskörper angebracht ist, erhöht werden kann. Vorzugsweise ist der Rotorblattverlängerungskörper zylindrisch ausgebildet bzw. ist im Querschnitt kreisförmig. Hierdurch ist eine besonders effiziente und einfache Anbringung des Rotorblattverlängerungskörpers an einer Rotorblattnabe und an einem Rotorblatt möglich, da die Anschlussmöglichkeiten hierzu üblicherweise auch kreisförmig sind. Der Rotorblattverlängerungskörper ist längserstreckt, d.h. dass dieser insbesondere eine längliche Erstreckung aufweist, die eine Verlängerung der Längsachse eines Rotorblatts darstellt, wenn Rotorblatt und Rotorblattverlängerungskörper miteinander verbunden sind. Vorzugsweise ist der Rotorblattverlängerungskörper als Stahlrohrsegment ausgebildet.

Erfindungsgemäß weist das Auftrieberzeugungselement einen Wirbelgenerator, wie zum Beispiel einen, insbesondere klassischen, Vortexgenerator auf einer Saugseite des Rotorblattverlängerungskörpers auf. Bei der Saugseite wird von der Seite ausgegangen, die bei einem an dem Rotorblattverlängerungskörper angeschlossenen Rotorblatt die Saugseite darstellt.

Vorzugsweise ist der Vortexgenerator in einem Bereich der Windangriffsfläche angebracht, also vor einem Winkel von 90° zu der örtlichen Anströmrichtung, wenn ein oberer Teillastbereich einer Windkraftanlage für die Orientierung des Rotorblatts bzw. des Rotorblattverlängerungskörpers zu Rate gezogen wird, d.h. vor einem Indenwinddrehen eines Rotorblatts und damit des mit dem Rotorblatt verbundenen Rotorblattverlängerungskörpers.

Durch Verwendung eines Vortexgenerators auf der Saugseite des Rotorblattverlängerungskörpers wird eine turbulente Umströmung stromabwärts des Vortexgenerators erzielt, wodurch der Widerstand auf der Saugseite verringert wird und damit ein Auftrieb in Richtung Saugseite entsteht. Vortexgeneratoren verursachen insbesondere diskrete Wirbel im Nachlauf der Vortexgeneratoren und sorgen so für eine effiziente Vermischung der Grenzschicht. Dieses führt insbesondere dazu, dass energetische Luftschichten mit Luftschichten in direkter Wandnähe, die durch Reibung bereits an kinetischer Energie verloren haben, vermischt werden.

Vorzugsweise ist das Auftrieberzeugungselement ein Luftwiderstandselement, insbesondere ein L-Profil. Dieses ist vorzugsweise auf der Druckseite, und zwar insbesondere vorzugsweise in einem Winkel von 90° zur örtlichen Anströmrichtung, die im oberen Teillastbereich einer Windkraftanlage vorherrscht. Das Luftwiderstandselement kann hierbei beispielsweise an dem Rotorblattverlängerungskörper angenietet sein, geklebt, geschraubt oder geschweißt sein. Entsprechend können die vorzugsweise zu verwendenden Vortexgeneratoren bzw. ein vorzugsweise zu verwendender Vortexgenerator angeklebt, genietet, geschraubt oder mit dem Rotorblattverlängerungskörper verschweißt sein.

Das Luftwiderstandselement, das vorzugsweise ein L-Profil ist, kann beispielsweise unkompliziert aus einem Blech gebogen sein. Vorzugsweise ist hierbei ein Schenkel des L-Profils an dem Rotorblattverlängerungskörper angebracht. Der andere Schenkel erstreckt sich vorzugsweise im Wesentlichen radial zum Rotorblattverlängerungskörper nach außen.

Erfindungsgemäß weist das Auftrieberzeugungselement ein Profilansatzelement auf, das in Luftströmungsrichtung am stromabwärtigen Teil des Rotorblattverlängerungskörpers angebracht ist. Hierdurch wird ähnlich einem aerodynamischen Profil eines Rotorblatts ein entsprechender Auftrieb erzeugt. Hierdurch kann der Energieertrag bzw. der Leistungsertrag der Windenergieanlage mit dem Rotorblattverlängerungskörper sehr effizient vergrößert werden.

Erfindungsgemäß ist das Profilansatzelement ein profiliertes Anbauelement mit stumpfer Hinterkante.

Erfindungsgemäß ist ein Rotorblatt mit einem erfindungsgemäßen Rotorblattverlängerungskörper versehen.

Vorzugsweise ist eine Windenergieanlage mit einem entsprechenden Rotorblatt mit Rotorblattverlängerungskörper, wie vorstehend beschrieben, versehen.

Erfindungsgemäß wird ein erfindungsgemäßer Rotorblattverlängerungskörper an einem Rotorblatt einer Windenergieanlage verwendet.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Ansicht einer erfindungsgemäßen Windenergieanlage,
- Fig. 2: eine schematische dreidimensionale Darstellung eines Rotorblattverlängerungskörpers mit einem Rotorblatt,
- Fig. 3: eine schematische Querschnittsdarstellung durch einen erfindungsgemäßen Rotorblattverlängerungskörper,
- Fig. 4: eine schematische Schnittdarstellung durch eine weitere Ausführungsform eines weiteren Rotorblattverlängerungskörpers,
- Fig. 5: eine schematische Schnittdarstellung durch noch eine weitere Ausführungsform eines weiteren Rotorblattverlängerungskörpers,
- Fig. 6: eine schematische Schnittdarstellung durch eine weitere Ausführungsform eines weiteren Rotorblattverlängerungskörpers und
- Fig. 7: eine weitere schematische Schnittdarstellung durch eine weitere Ausführungsform eines weiteren Rotorblattverlängerungskörpers.

In den Zeichnungen sind jeweils gleiche oder gleichartige Elemente und/oder Teile mit denselben Bezugsziffern versehen, so dass von einer erneuten Vorstellung jeweils abgesehen wird.

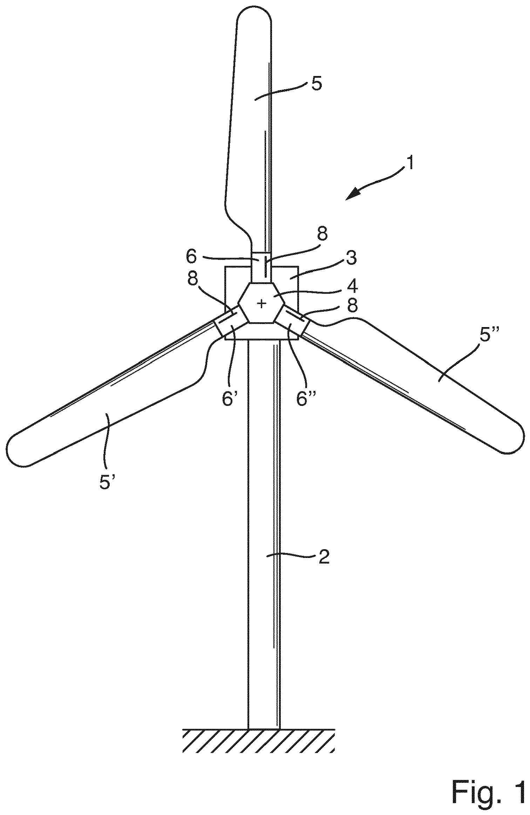

Fig. 1 zeigt schematisch eine erfindungsgemäße Windenergieanlage 1 in schematischer Ansicht. Die Windenergieanlage 1 weist einen Turm 2 auf, der auf einem Boden errichtet ist. Der Turm 2 kann ein Rohrturm sein oder ein Gitterturm. Die Windenergieanlage kann auch offshore gegründet sein. Auf dem Turm 2 ist ein Maschinenhaus 3 angeordnet, in dem typischerweise ein Generator angeordnet ist, der über eine Nabe 4 mit dem Rotor, umfassend die Rotorblätter 5, 5' und 5", der Windenergieanlage verbunden ist. Zwischen den Rotorblättern 5, 5',5" und der Nabe 4 sind Rotorblattverlängerungskörper 6, 6' und 6" angebracht. Diese können beispielsweise über übliche Schraubverbindungen an Flanschen sowohl mit der Nabe als auch mit dem jeweiligen Rotorblatt verbunden sein. Hierzu wird beispielsweise auf die WO 01/42647 A2 verwiesen.

In Fig. 1 ist der Rotor mit Rotorblättern 5, 5', 5" versehen, die im Wesentlichen bzw. vollständig im Hinblick auf deren Pitchwinkel eingestellt sind, dass der maximale Energieertrag aus dem von vorne, d.h. aus der von der Betrachterrichtung ausgehenden Wind entnommen werden kann. Das heißt, die blattwinkelverstellbaren Rotorblätter 5,5' und 5" sind so angeordnet, dass die maximale Fläche der Rotorblätter dem Wind entgegengestellt ist und die maximale Energie aus dem Wind entnehmen kann. Dieses ist eine Rotorblattstellung, die üblicherweise im oberen Teillastbereich einer Windenergieanlage verwendet wird. Bei stärker werdendem Wind werden dann die Rotorblätter entsprechend so verstellt, dass diese immer weiter in den Wind hineingedreht werden, bis diese bei einer Abschaltwindgeschwindigkeit in Fahnenstellung verstellt werden. Wenn die Rotorblattstellung in Fig. 1 als eine 0°-Stellung angesehen werden würde, wäre die Fahnenstellung bei etwa 90°.

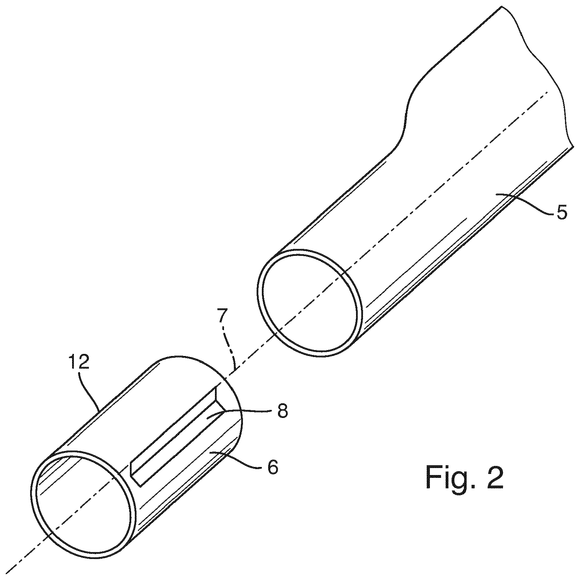

Fig. 2 zeigt schematisch in einer dreidimensionalen Darstellung einen Rotorblattverlängerungskörper 6, der zylinderförmig ausgestaltet ist und einen Umfang 12 aufweist. Der Rotorblattverlängerungskörper 6 ist längserstreckt, nämlich längs der Längsachse 7 des Rotorblatts 5, das auch schematisch im Ansatz, und zwar teilweise gezeigt ist, und zwar zur Rotorblattwurzel hin. Der Rotorblattverlängerungskörper 6 und das Rotorblatt 5 sind hier voneinander getrennt dargestellt. Es ist ein L-Körper 8 bzw. L-Profil 8 als Luftwiderstandselement auf dem Rotorblattverlängerungskörper angebracht. Das Luftwiderstandselement 8 ist längserstreckt, und zwar im Wesentlichen parallel zur Längsachse des Rotorblattverlängerungskörpers.

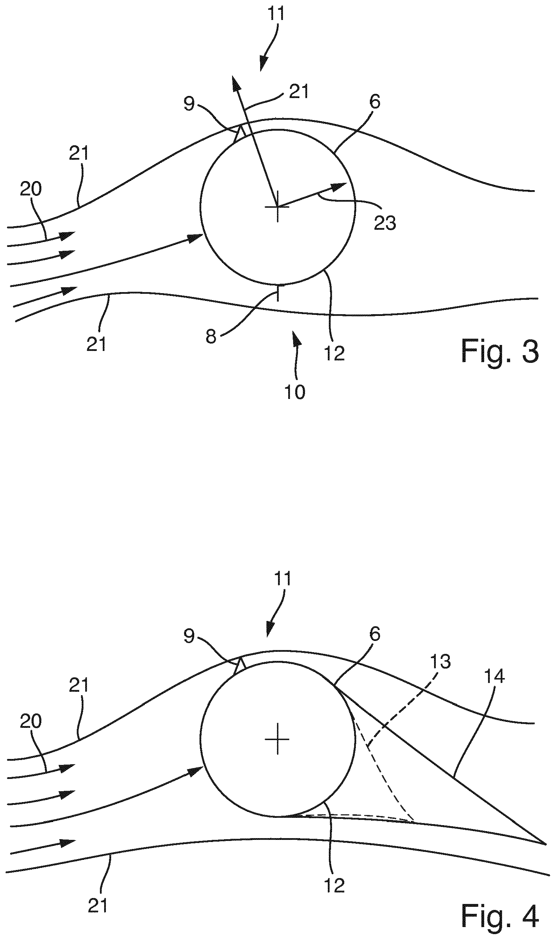

Fig. 3 zeigt schematisch eine Schnittdarstellung durch einen Rotorblattverlängerungskörper 6 in einem Windfeld. Eine Luftströmung 20 strömt auf den vorderen Bereich des Rotorblattverlängerungskörpers 6. Durch den Widerstand des Rotorblattverlängerungskörpers 6 ergibt sich eine Verbreiterung der Luftströmung 21. Durch entsprechende Maßnahmen wird nun dafür gesorgt, dass eine entsprechend große Auftriebskraft 22 bei möglichst kleiner Widerstandskraft 23 erzeugt wird. So ist in diesem Ausführungsbeispiel beispielsweise auf der Saugseite 11 ein Vortexgenerator 9 angebracht und auf der Druckseite 12 ein Widerstandselement 8, in diesem Fall in Form eines L-Profils. Es kann auch vorgesehen sein, dass nur eines dieser beiden Elemente verwendet wird. Bevorzugterweise werden allerdings beide Elemente gleichzeitig verwendet, da so die Wirkung optimiert werden kann.

Der Vortexgenerator 9 ist auf der Saugseite 11 angeordnet, und zwar in Richtung der Luftströmung 20. Das Widerstandselement 8 ist vorzugsweise bei 90° zu der Luftströmungsrichtung angeordnet, wobei hierbei eine Winkelstellung des Rotorblatts bzw. des Rotorblattverlängerungskörpers vorgesehen ist, der im oberen Teillastbereich einer Windenergieanlage vorherrscht.

Fig. 4 zeigt eine weitere Ausführungsform eines Rotorblattverlängerungskörpers 6 in schematischer Schnittdarstellung. Auch hier ist ein Vortexgenerator 9 vorgesehen. Zudem ist ein profiliertes Anbauelement mit scharfer Hinterkante 14 im stromabwärtigen Teil des Umfangs 12 des Rotorblattverlängerungskörpers 6 angebracht. Alternativ und gestrichelt dargestellt kann auch ein Spoiler 13 vorgesehen sein.

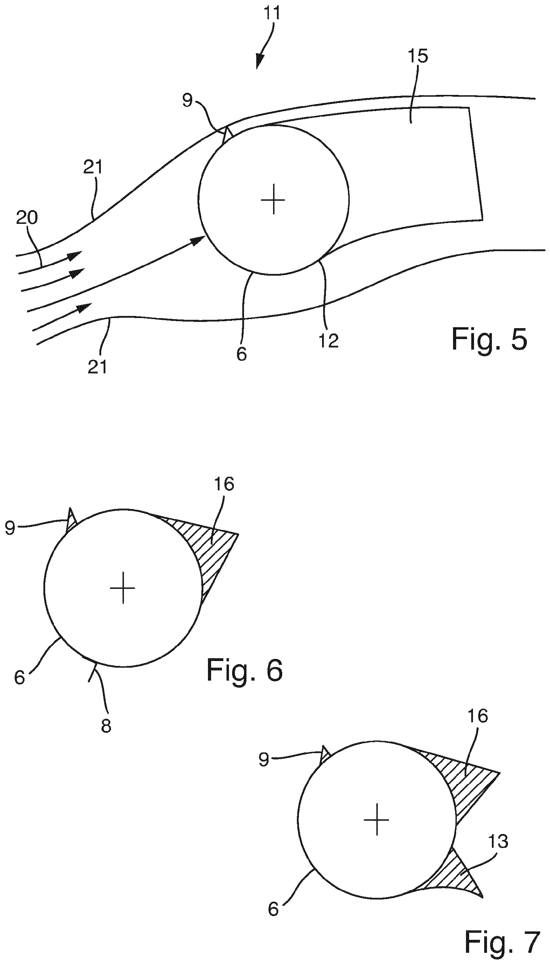

Fig. 5 zeigt schematisch in einer Schnittdarstellung einen weiteren Rotorblattverlängerungskörper. In diesem Fall ist ein profiliertes Anbauelement 15 mit stumpfer Hinterkante am stromabwärtigen Teil des Umfangs 12 des Rotorblattverlängerungskörpers 6 angebracht.

Durch Vorsehen eines Spoilers als nicht-strukturelles Anbauteil einer Hinterkante bzw. im hinteren Bereich des Rotorblattverlängerungskörpers wird die Wirkfläche für den Auftrieb erhöht. Entsprechend wird durch Verwendung eines profilierten Anbauelements mit scharfer Hinterkante oder mit stumpfer Hinterkante der Auftrieb erhöht. Insbesondere mit Verwendung eines Vortexgenerators 9 wird die Wirkung hier optimiert.

Fig. 6 zeigt schematisch eine Schnittdarstellung durch eine weitere Ausführungsform eines Rotorblattverlängerungskörpers. In dieser Ausführungsform sind sowohl ein Vortexgenerator 9 als auch ein Widerstandselement 8 vorgesehen. Zusätzlich ist ein Saugseitenverlängerungskörper 16 an der Saugseite angeordnet. Der Saugseitenverlängerungskörper 16 stellt in diesem Ausführungsbeispiel im Wesentlichen eine tangentiale Verlängerung der Saugseite dar, wodurch der Auftritt erhöht wird.

Fig. 7 zeigt schematisch noch eine weitere Ausführungsform eines Rotorblattverlängerungskörpers 6. Außer einem Vortexgenerator 9 und dem in Fig. 6 schon gezeigten Saugseitenverlängerungskörper 16 ist zusätzlich auf der Druckseite ein Spoiler 13 vorgesehen. Der Spoiler 13 ist in diesem Ausführungsbeispiel mit einem S-Schlag im Profil versehen, um den Auftrieb noch stärker zu erhöhen.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezuaszeichenliste

- 1: Windenergieanlage
- 2: Turm
- 3: Maschinenhaus
- 4: Nabe
- 5, 5', 5": Rotorblatt
- 6, 6', 6": Rotorblattverlängerungskörper
- 7: Längsachse
- 8: Widerstandselement
- 9: Vortexgenerator
- 10: Druckseite
- 11: Saugseite
- 12: Umfang
- 13: Spoiler
- 14: profiliertes Anbauelement mit scharfer Hinterkante
- 15: profiliertes Anbauelement mit stumpfer Hinterkante
- 16: Saugseitenverlängerungskörper
- 20: Luftströmung
- 21: Luftströmung
- 22: Auftriebskraft
- 23: Widerstandskraft

## Patentansprüche

1. Rotorblattverlängerungskörper (6, 6', 6") zur Verwendung mit einem Rotorblatt (5, 5', 5") eines Rotors einer Windenergieanlage (1), wobei der Rotorblattverlängerungskörper (6, 6', 6") längserstreckt ist, wobei am Umfang (12) des Rotorblattverlängerungskörpers (6, 6', 6") ein Auftrieberzeugungselement (8, 9, 13, 14, 15) angebracht ist, wobei das Auftrieberzeugungselement (8, 9, 13, 14, 15) sowohl ein profiliertes Anbauelement (15) mit stumpfer Hinterkante, das in Luftströmungsrichtung (20) am stromabwärtigen Teil des Rotorblattverlängerungskörpers (6, 6', 6") angebracht ist, als auch einen Wirbelgenerator, insbesondere einen Vortexgenerator (9), auf einer Saugseite (11) des Rotorblattverlängerungskörpers, aufweist.

2. Rotorblattverlängerungskörper (6, 6', 6") nach Anspruch 1, **dadurch gekennzeichnet, dass** das Auftriebserzeugungselement (8, 9, 13, 14, 15) ein Luftwiderstandselement (8), insbesondere ein L-Profil, aufweist.

3. Rotorblatt (5, 5', 5") mit Rotorblattverlängerungskörper (6, 6', 6") nach einem der Ansprüche 1 oder 2.

4. Windenergieanlage (1) mit einem Rotorblatt (5, 5', 5") nach Anspruch 3.

5. Verwendung eines Rotorblattverlängerungskörpers (6, 6', 6") nach einem der Ansprüche 1 oder 2 an einem Rotorblatt (5, 5', 5") einer Windenergieanlage (1).

## Claims

1. A rotor blade extension body (6, 6', 6") for use with a rotor blade (5, 5', 5") of a rotor of a wind energy installation (1), wherein the rotor blade extension body (6, 6', 6") is constructed in an elongate manner, wherein an uplift generating element (8, 9, 13, 14, 15) is attached to the circumference (12) of the rotor blade extension body (6, 6', 6"), wherein the uplift generating element (8, 9, 13, 14, 15) comprises both a profiled mounton element (15) with a blunt trailing edge, which profiled attachment element (15) is attached, in relation to the direction of the air flow (20), to the downstream part of the rotor blade extension body (6, 6', 6"), and an eddy generator, in particular a vortex generator (9), on a suction side (11) of the rotor blade extension body.

2. The rotor blade extension body (6, 6', 6") according to claim 1, **characterised in that** the uplift generating element (8, 9, 13, 14, 15) comprises an air resistance element (8), in particular an L-profile.

3. A rotor blade (5, 5', 5") with a rotor blade extension body (6, 6', 6") according to any one of the claims 1 or 2.

4. A wind energy installation (1) with a rotor blade (5, 5', 5") according to claim 3.

5. Use of a rotor blade extension body (6, 6', 6") according to any one of the claims 1 or 2 on a rotor blade (5, 5', 5") of a wind energy installation (1).

## Revendications

1. Corps de rallonge de pale de rotor (6, 6', 6") à utiliser avec une pale de rotor (5, 5', 5") d'un rotor d'une éolienne (1), dans lequel le corps de rallonge de pale de rotor (6, 6', 6") est allongé, dans lequel un élément de production de portance (8, 9, 13, 14, 15) est monté sur la circonférence (12) du corps de rallonge de pale de rotor (6, 6', 6"), dans lequel l'élément de production de portance (8, 9, 13, 14, 15) présente aussi bien un élément rapporté profilé (15) avec arête arrière émoussée, qui est monté dans le sens d'écoulement de l'air (20) sur la partie en aval du corps de rallonge de pale de rotor (6, 6', 6"), qu'un générateur de tourbillon, en particulier un générateur de vortex (9), sur un côté aspiration (11) du corps de rallonge de pale de rotor.

2. Corps de rallonge de pale de rotor (6, 6', 6") selon la revendication 1, **caractérisé en ce que** l'élément de production de portance (8, 9, 13, 14, 15) présente un élément de résistance de l'air (8), en particulier un profil en L.

3. Pale de rotor (5, 5', 5") avec corps de rallonge de pale de rotor (6, 6', 6") selon l'une quelconque des revendications 1 ou 2.

4. Éolienne (1) avec une pale de rotor (5, 5', 5") selon la revendication 3.

5. Utilisation d'un corps de rallonge de pale de rotor (6, 6', 6") selon l'une quelconque des revendications 1 ou 2 sur une pale de rotor (5, 5', 5") d'une éolienne (1).
